# EUROPEAN PATENT SPECIFICATION

(11) **EP 3 581 266 B1**
(45) Date of publication and mention of the grant of the patent: **20.12.2023**
(21) Application number: 17895858.3
(22) Date of filing: 30.10.2017
(51) Int. Cl.: B01J 19/18, B01J 19/00, C05C 9/02

(54) **CONTINUOUS REACTOR**
KONTINUIERLICHER REAKTOR
RÉACTEUR CONTINU

(30) Priority: 08.02.2017 CN 201710069588
(43) Date of publication of application: 18.12.2019
(73) Proprietor: Zhengzhou Gaofu Fertilizer Co., Ltd, Henan 450000 (CN)
(72) Inventor: HU, Jianmin, Henan 450000 (CN); WAN, Peikun, Henan 450000 (CN); HU, Jinzhe, Henan 450000 (CN); BAI, Yuntao, Henan 450000 (CN); LIU, Xiaoyong, Henan 450000 (CN); HU, Shumin, Henan 450000 (CN)
(74) Representative: Brevalex
(86) International application number: PCT/CN2017/108245
(87) International publication number: WO 2018/145490

(56) References cited:
- CN-A- 104 607 128
- CN-A- 106 824 030
- CN-U- 202 277 831
- CN-U- 202 277 831
- CN-U- 202 725 169
- CN-U- 204 365 269
- CN-U- 205 700 536
- GB-A- 637 561
- GB-A- 713 692
- US-A- 3 988 117

## Description

### Technical Field

The present invention relates to a continuous reactor and relates to the field of chemical reaction devices.

### Background Art

In the prior art, some chemical reactions require a temperature regulating process in the early stage, and when a raw material starts to react, heat is generated or heat is required; the general reaction is to use a reaction kettle, and the reaction is performed intermittently in the reaction kettle one by one; and temperature regulation needs to be performed on the reaction material when the reaction starts, that is, the temperature of the material needs to be elevated or lowered to achieve reaction conditions. After the reaction is started, if it is an exothermic reaction, the temperature thereof needs to be continuously lowered; and if it is an endothermic reaction, it needs to be continuously heated. By keeping the material at the optimum reaction temperature, the process of elevating or lowering the temperature needs to consume energy. Cooling water or other coolants are used when lowering the temperature is required, the cooling process will cause waste and loss of heat generated by the reaction process, which is not in line with the theme of energy conservation and environmental protection in modern society; and typically the reaction kettle can only work intermittently, that is, only after a batch of raw material completes the reaction and is discharged, the next batch of raw material can be fed to react, resulting in a slow reaction rate and a low production efficiency.

**D1** (CN 104 607 128 A) discloses a reactor for preparing iron oxide via circulation precipitation, and the reactor is composed of a reaction tank, an inner barrel body, a variable frequency motor, a main shaft, stirring paddles, a heating coil pipe, aeration discs, a sewage joint, and a thermometer; wherein, the inner barrel body is arranged in the reaction tank, and the lower side of the inner barrel is set with a backflow hole.

**D2** (CN 202 277 831 U) discloses a deposition reaction vessel for continuous production. It is composed of a reaction vessel outer wall, a reaction vessel inner barrel, a steam heating sleeve, a kettle cover, a stirring and lifting device, and a temperature measuring device. A steam heating sleeve is positioned between the reaction vessel outer wall and the reaction vessel inner barrel, and a discharging channel is equipped between the reaction vessel outer wall and the steam heating sleeve.

### Summary of the Invention

The present invention concerns a continuous reactor as defined in the independent claim. Preferred embodiments are described in the dependent claims and in the examples.

The technical problem to be solved by the present invention is to provide a continuous reactor which overcomes the defects that heat released by a chemical reaction in the prior art cannot be effectively utilized and the production efficiency is low.

The technical solution of the present invention to solve the above technical problem is as follows: a continuous reactor, comprising a main reaction housing and at least one auxiliary reaction housing, wherein the main reaction housing is internally provided with a stirring device and a first temperature regulating device and is provided with a material inlet at the upper end thereof; the auxiliary reaction housing is sheathed outside the main reaction housing, and a reaction cavity is reserved therebetween; an overflow hole in communication with the reaction cavity is formed on an upper side wall of the main reaction housing; the lower end of each of the main reaction housing and the auxiliary reaction housing is provided with a drainage port which is in communication with the outside of the auxiliary reaction housing; and the lower end of the auxiliary reaction housing is provided with a discharge port.

The beneficial effects of the present invention are as follows: In the present invention, since at least one auxiliary reaction housing is sheathed outside the main reaction housing, and a reaction raw material is added to the main reaction housing for mixing through the material inlet at the upper end of the main reaction housing; temperature regulation is performed on the reaction raw material through the first temperature regulating device, and the reacted material enters the reaction cavity between the main reaction housing and the auxiliary reaction housing through the overflow port; and heat of the reaction material in the reaction cavity can regulate the temperature of the material in the main reaction cavity to realize effective use of the heat or the normal progress of the reaction, and the material having completed the reaction is discharged through the discharge port at the lower end of the auxiliary reaction housing, thereby achieving continuous production.

Based on the above technical solution, the present invention can also be improved as follows.

In the continuous reactor as described above of the present invention, further, two or more auxiliary reaction housings are provided and are arranged in a sheathed manner from the inside to the outside, and a reserved reaction cavity is provided between two adjacent auxiliary reaction housings. In the above solution of the present invention, the width of the reaction cavity between the main reaction housing and the auxiliary reaction housing and between the auxiliary reaction housings is greater than 0.5 m, and generally the range of 1 m to 3 m can be selected; and different sizes can also be designed according to the requirements of the material reaction.

The further beneficial effects of using the above are: two or more auxiliary reaction housings are provided, which can meet the requirements of a material with a long reaction process and achieve a more sufficient reaction process.

In the continuous reactor as described above of the present invention, further, the upper end of each of the main reaction housing and the auxiliary reaction housing is an open part, a cover body is provided at the open part, and the material inlet is disposed on the cover body.

The further beneficial effects of using the above are: with respect to a larger reactor, the cover body can be provided to conveniently open the main reaction housing and the auxiliary reaction housing, so as to quickly clean the inside of the main reaction housing and the auxiliary reaction housing. The cover body of the present utility model can be provided with a manhole, and the inside of the main reaction housing and the auxiliary reaction housing can also be cleaned through the manhole.

In the continuous reactor as described above of the present invention, further, a second temperature regulating device is disposed in the auxiliary reaction housing.

The further beneficial effects of using the above are: when the material entering the reaction cavity inside the auxiliary reaction housing is not completely reacted, the second temperature regulating device can be turned on to perform temperature regulation to meet the temperature required for the reaction of the material to achieve a complete reaction.

In the continuous reactor as described above of the present invention, further, the first temperature regulating device and the second temperature regulating device are both coil temperature regulators. Preferably, in the above solution, the main reaction housing and the auxiliary reaction housing sheathed to each other are cylindrical, and bottom walls at the bottom ends of the cylindrical main reaction housing and auxiliary reaction housing are in sealing connection or integral connection, and may be in one plane, and can also be in the shape of an outwardly convex circular arc.

The further beneficial effects of using the above are: coils of the coil temperature regulators can be better disposed in inner side walls of the main reaction housing and the auxiliary reaction housing to achieve uniform temperature regulation of the reaction material.

In the continuous reactor as described above of the present invention, further, one side of the auxiliary reaction housing is provided with an outer circulation outlet in communication with the outside of the outermost auxiliary reaction housing, the other side of the auxiliary reaction housing is provided with an outer circulation inlet in communication with the outside of the outermost auxiliary reaction housing, the corresponding outer circulation outlet and the outer circulation inlet of the auxiliary reaction housing are communicated by a duct, and the duct is provided with a circulation pump. A lower side wall at one side of the auxiliary reaction housing is provided with an outer circulation outlet in communication with the outside of the outermost auxiliary reaction housing, and an upper portion at the other side of the auxiliary reaction housing is provided with an outer circulation inlet in communication with the outside of the outermost auxiliary reaction housing.

The further beneficial effects of using the above are: an outer circulation pump can be used to achieve uniform mixing of materials in the reaction cavity, thereby increasing the reaction intensity and accelerating the reaction process.

In the continuous reactor as described above of the present invention, further, a support structure is connected between the outside of the main reaction housing and the inside of the auxiliary reaction housing or between the auxiliary reaction housings.

The further beneficial effect of using the above is: the stability of the entire reactor is ensured.

In the continuous reactor as described above of the present invention, further, a filter screen is provided in the main reaction housing below the overflow port and in the upper portion of the reaction cavity.

The further beneficial effects of using the above are: since the filter screen is provided in the main reaction housing and in the upper portion of the reaction cavity and below the overflow port, it can reduce large unreacted solid particles entering the next reaction cavity, which ensures that the reaction process is fully carried out.

In the continuous reactor as described above of the present invention, further, a test port is provided at the upper end of the main reaction housing and/or the auxiliary reaction housing.

The further beneficial effects of using the above are: the reaction cases in the main reaction housing and/or the auxiliary reaction housing are immediately detected to reasonably determine the feed rate and the feed time.

In the continuous reactor as described above of the present invention, further, a manhole is provided at the upper end of the main reaction housing and/or the auxiliary reaction housing. When the auxiliary reaction housings are of a plurality of layers, they are arranged from the inside to the outside in sequence, and the upper end of each of the main reaction housing and each auxiliary reaction housing is provided with a manhole and/or inspection hole.

The further beneficial effects of using the above solution are: the main reaction housing and each auxiliary reaction housing can be maintained and cleaned through the manhole, and the reaction material in the reaction cavity can also be observed, detected and adjusted at any time through the inspection hole.

In the above solution of the present invention, a temperature detecting device and a pH detecting device are disposed in the main reaction housing and the reaction cavity, the temperature detecting device may be a temperature sensor, and the pH detecting device may be a pH meter.

In the present invention, a stirring paddle may be disposed in the reaction cavity between the main reaction housing and the auxiliary reaction housing or in the reaction cavity between two or more auxiliary reaction housings which are sheathed to each other, and may be turned on according to the reaction requirement.

### Brief Description of the Drawings

Fig.1 is a schematic structural view of a specific example of a continuous reactor according to the present invention;
Fig.2 is a schematic structural view of another specific example of a continuous reactor according to the present invention;
Fig.3 is a schematic structural view of a third specific example of a continuous reactor according to the present invention; and
Fig.4 is a schematic structural view of a fourth specific example of a continuous reactor according to the present invention.

In the drawings, the list of components represented by individual reference numerals are as follows:
1. Main reaction housing, 2. Auxiliary reaction housing, 21. First auxiliary reaction housing, 22. Second auxiliary reaction housing, 3. Material inlet, 4. Test port, 5. Filter screen, 6. Manhole, 7. Overflow hole, 8. Coil temperature regulator, 9. Support rod, 10. Outer circulation outlet, 11. Drainage port, 12. Discharge port, 13. Outer circulation inlet, 14. Stirring device, 15. Cover body.

### Detailed Description of Embodiments

The principles and features of the present invention are described below in conjunction with the accompanying drawings.

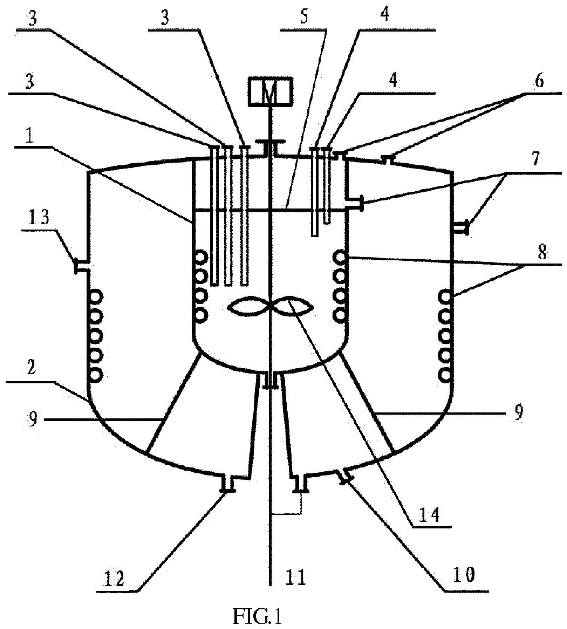

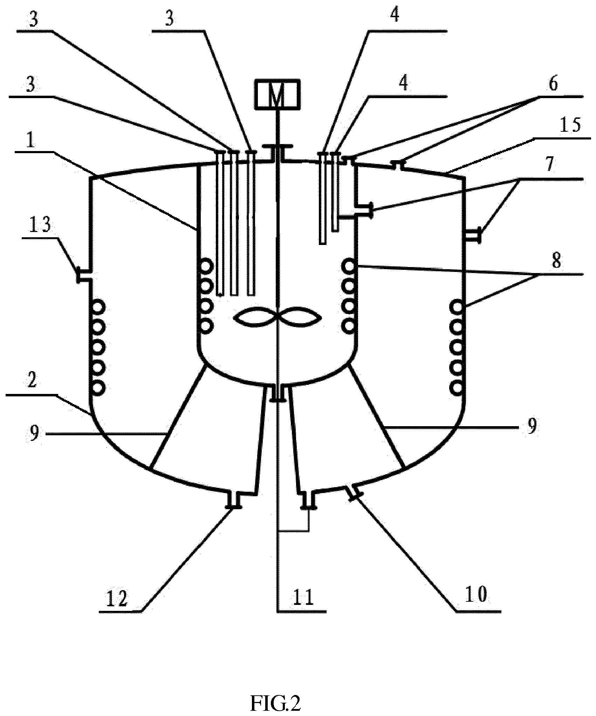

As shown in Figs. 1 to 4, a continuous reactor comprises a main reaction housing 1 and at least one auxiliary reaction housing 2, wherein the main reaction housing 1 is internally provided with a stirring device 14 and a first temperature regulating device and is provided with a material inlet 3 at the upper end thereof; the auxiliary reaction housing 2 is sheathed outside the main reaction housing 1, and a reaction cavity is reserved therebetween; an overflow hole 7 in communication with the reaction cavity is formed on an upper side wall of the main reaction housing 1; the lower end of each of the main reaction housing 2 and the auxiliary reaction housing 3 is provided with a drainage 11 port which is in communication with the outside of the auxiliary reaction housing 2; and the lower end of the auxiliary reaction housing 2 is provided with a discharge port 12.

Specifically, the upper end of each of the main reaction housing 1 and the auxiliary reaction housing 2 is provided with a manhole 6 for maintenance of and cleaning residues in the main reaction housing 1 and the auxiliary reaction housing 2. It is also possible to provide an inspection hole, and a reaction material in the reaction cavity can be observed, detected and adjusted at any time.

In some specific embodiments, two or more auxiliary reaction housings 2 are provided and are arranged in a sheathed manner from the inside to the outside, and a reserved reaction cavity is provided between two adjacent auxiliary reaction housings 2. In the above solution of the present invention, the width of the reaction cavity between the main reaction housing 1 and the auxiliary reaction housing 2 and between the auxiliary reaction housings 2 is greater than 0.5 m, and generally the range of 1 m to 3 m can be selected. Different sizes can also be designed according to the requirements of the material reaction. In the solution, the discharge port 12 may be disposed at the bottom end of each auxiliary reaction housing 2, or may be disposed only at the bottom end of the outermost auxiliary reaction housing 2, and the discharge port 12 at the bottom end of each auxiliary reaction housing 2 is in communication with the outside of the outermost auxiliary reaction housing 2.

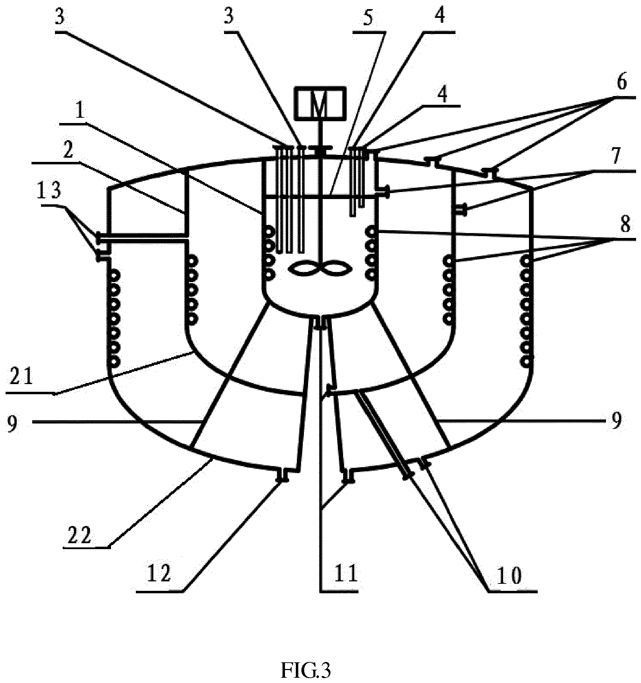

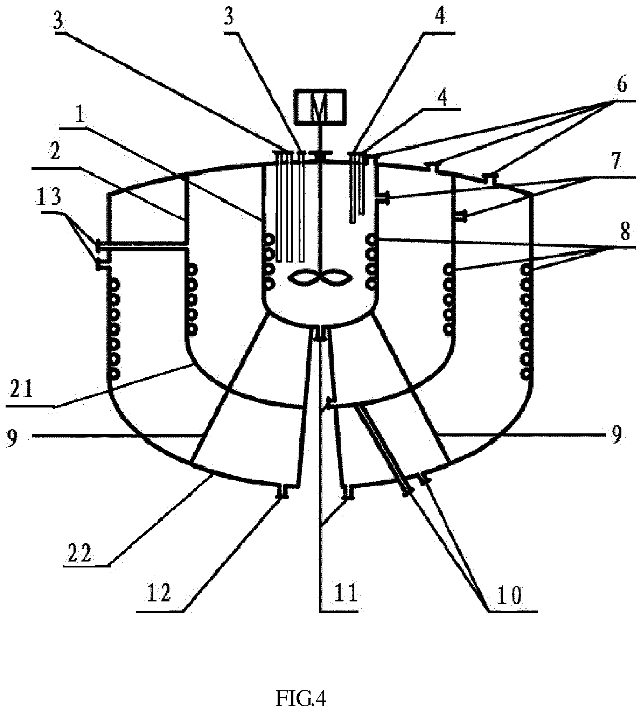

As shown in Figs. 3 and 4, two auxiliary reaction housings 2/21, 22 are provided and are arranged in a sheathed manner from the inside to the outside, and a reaction cavity is reserved therebetween; and the upper end of each of the main reaction housing 1 and the auxiliary reaction housings 2/21, 22 is an open part or opening, a cover body 15 is provided at the open part or opening, and the material inlet 3 is disposed on the cover body 15. The cover body 15 is provided with a plurality of material inlets 3 and a plurality of test ports 4. The cover body 15 at the upper ends of the main reaction housing 1 and the auxiliary reaction housings 2/21, 22 is opened to effect rapid feeding or to clean the reactor.

In other specific embodiments, the auxiliary reaction housing 2 is internally provided with a second temperature regulating device. Preferably, in the solution, the first temperature regulating device and the second temperature regulating device are both coil temperature regulators 8, and coils of the coil temperature regulators 8 can be better disposed in inner side walls of the main reaction housing 1 and the auxiliary reaction housing 2 to achieve uniform temperature regulation of the reaction material. Preferably, in the solution of this embodiment, the main reaction housing 1 and the auxiliary reaction housing 2 are both of a cylindrical shape with two open ends, and the bottom ends thereof are outwardly convex circular arc bottom walls in sealing connection or integral connection.

In a specific example, a lower portion at one side of the auxiliary reaction housing 2 is provided with an outer circulation outlet 10 in communication with the outside of the outermost auxiliary reaction housing 2, an upper portion at the other side of the auxiliary reaction housing 2 is provided with an outer circulation inlet 13 in communication with the outside of the outermost auxiliary reaction housing 2, the corresponding outer circulation outlet 10 and the outer circulation inlet 13 of the auxiliary reaction housing 2 are communicated by a duct, and the duct is provided with a circulation pump. In the solution, an outer circulation pump can be used to achieve uniform mixing of materials in the entire reaction cavity, thereby accelerating the reaction process.

According to an embodiment of the present invention, in another specific example, a support structure is connected between the outside of the main reaction housing 1 and the inside of the auxiliary reaction housing 2 or between the auxiliary reaction housings 2/21, 22. The support structure may be a support rod 9 or a support frame, and the main reaction housing 1 and the auxiliary reaction housing 2/21, 22 and the support rod 9 or the support frame mentioned above are made of a heat conductive material suitable for the reaction material. The stability of the entire reactor is ensured to achieve a steady reaction process.

As shown in Figs. 1 and 3, in a specific example, a filter screen 5 is provided in the main reaction housing 1 below the overflow port 7 and in the upper portion of the reaction cavity. The filter screen structure can reduce large unreacted solid particles entering the next reaction cavity, which ensures that the reaction process is fully carried out. The pore size of the filter screen is 0.5 mm to 1.5 mm and can be configured reasonably according to the reaction requirements.

### Embodiment 1

A continuous reactor comprises a main reaction housing, a first auxiliary reaction housing and a second auxiliary reaction housing, wherein the main reaction housing is internally provided with a stirring device and a first temperature regulating device and is provided with a material inlet at the upper end thereof; the auxiliary reaction housing is sheathed outside the main reaction housing, and a reaction cavity is reserved therebetween; and the second auxiliary reaction housing is sheathed outside the first auxiliary reaction housing, and a reaction cavity is reserved therebetween; an overflow hole in communication with the reaction cavity is formed on an upper side wall of the main reaction housing; the lower end of each of the main reaction housing, the first auxiliary reaction housing and the second auxiliary reaction housing is provided with a drainage port which is in communication with the outside of the second auxiliary reaction housing; the lower end of the auxiliary reaction housing is provided with a discharge port; a manhole is disposed at the upper end of each of the first and second auxiliary reaction housings; and a lower portion at one side of each of the first and second auxiliary reaction housings is provided with an outer circulation outlet in communication with the outside of the second auxiliary reaction housing, an upper portion at the other side of each of the first and second auxiliary reaction housings is provided with an outer circulation inlet in communication with the outside of the outermost auxiliary reaction housing, the corresponding outer circulation outlet and the outer circulation inlet of the auxiliary reaction housing are communicated by a duct, and the duct is provided with a circulation pump.

The reaction of urea and formaldehyde was carried out by using the continuous reactor of Embodiment 1; the material inlet includes a urea feed port, a formaldehyde feed port and a catalyst feed port; and a temperature sensor and a pH meter are disposed in the main reaction housing and the reaction cavity.

Under the reaction condition of granular urea and 37% formaldehyde solution at a molar ratio of 2 : 1, depending on the ambient temperature, the production of each ton of poly urea-formaldehyde slow-release nitrogen fertilizer containing 40% slow-release nitrogen can save 10 kg to 15 kg of standard coal. If a production unit produces 100,000 tons of poly urea-formaldehyde slow-release nitrogen fertilizer per year, it can save 1,000 tons to 1,500 tons of standard coal.

In a traditional method, equipment and plant investment for producing more than 100,000 tons of products is 3-4 times of the investment of the continuous reactor of the present invention, the labor cost thereof is 4-5 times of the investment of the continuous reactor of the present invention, and thus the production efficiency thereof is increased by more than 70%.

## Claims

1. A continuous reactor, comprising a main reaction housing (1) and at least one auxiliary reaction housing (2, 21, 22) , wherein the main reaction housing (1) is internally provided with a stirring device (14) and a first temperature regulating device (8) and is provided with a material inlet (3) at the upper end thereof; the auxiliary reaction housing (2, 21, 22) is sheathed outside the main reaction housing (1), and a reaction cavity is reserved therebetween; an overflow hole (7) in communication with the reaction cavity is formed on an upper side wall of the main reaction housing (1); the lower end of each of the main reaction housing (1) and the auxiliary reaction housing (2, 21, 22) is provided with a drainage port (11) which is in communication with the outside of the auxiliary reaction housing (2, 21, 22); and the lower end of the auxiliary reaction housing (2, 21, 22) is provided with a discharge port (12); **characterized in that** a lower portion of one side of the auxiliary reaction housing (2, 21) is provided with an outer circulation outlet (10) in communication with the outside of the outermost auxiliary reaction housing (2, 22), an upper portion of the other side of the auxiliary reaction housing (2, 21) is provided with an outer circulation inlet (13) in communication with the outside of the outermost auxiliary reaction housing (2, 22), the corresponding outer circulation outlet (10) and the outer circulation inlet (13) of the auxiliary reaction housing are communicated by a duct, and the duct is provided with a circulation pump; and a second temperature regulating device (8) is disposed in the auxiliary reaction housing (2, 21, 22).

2. The continuous reactor as claimed in claim 1, **characterized in that** two or more auxiliary reaction housings (21, 22) are provided and are arranged in a sheathed manner from the inside to the outside, and a reserved reaction cavity is provided between two adjacent auxiliary reaction housings (21, 22).

3. The continuous reactor as claimed in claim 1, **characterized in that** the upper end of each of the main reaction housing (1) and the auxiliary reaction housing (2, 21, 22) is an open part, a cover body (15) is provided at the open part, and the material inlet (3) is disposed on the cover body (15).

4. The continuous reactor as claimed in claim 1, **characterized in that** the first temperature regulating device (8) and the second temperature regulating device (8) are both coil temperature regulators.

5. The continuous reactor as claimed in any one of claims 1-4, **characterized in that** a support structure (9) is connected between the outside of the main reaction housing (1) and the inside of the auxiliary reaction housing (2, 21, 22) or between the auxiliary reaction housings (21, 22).

6. The continuous reactor as claimed in any one of claims 1-4, **characterized in that** a filter screen (5) is provided in the main reaction housing (1) below the overflow port (7) and in the upper portion of the reaction cavity.

7. The continuous reactor as claimed in any one of claims 1-4 **characterized in that** a test port (4) is provided at the upper end of the main reaction housing (1) and/or the auxiliary reaction housing (2, 21, 22).

8. The continuous reactor as claimed in any one of claims 1-4, **characterized in that** the upper end of each of the main reaction housing (1) and each corresponding auxiliary reaction housing (2, 21, 22) is provided with a manhole (6) and/or inspection hole.

## Patentansprüche

1. Ein kontinuierlicher Reaktor, bestehend aus einem Hauptreaktionsgehäuse (1) und mindestens einem Hilfsreaktionsgehäuse (2, 21, 22), wobei das Hauptreaktionsgehäuse (1) intern mit einer Rührvorrichtung (14) und einer ersten Temperaturregelvorrichtung (8) ausgestattet ist und am oberen Ende mit einem Materialeinlass (3) versehen ist; Das Hilfsreaktionsgehäuse (2,21, 22) ist außerhalb des Hauptreaktionsgehäuses ummantelt (1) und dazwischen ist ein Reaktionsholz reserviert; An der oberen Seitenwand des Hauptreaktionsgehäuses (1) wird ein Überlaufloch (7) in Verbindung mit dem Reaktionsholz gebildet; Das untere Ende jedes Hauptreaktionsgehäuses (1) und des Hilfsreaktionsgehäuses (2, 21, 22) ist mit einer Drainageöffnung (11) versehen, die mit der Außenseite des Hilfsreaktionsgehäuses kommuniziert (2, 21,22); und das untere Ende des Hilfsreaktionsgehäuses (2, 21, 22) ist mit einem Anschlussanschluss (12) versehen, **dadurch gekennzeichnet, dass** ein unterer Teil einer Seite des Hilfsreaktionsgehäuses (2, 21) in Verbindung mit der Außenseite des äußersten Hilfsreaktionsgehäuses (2, 22) mit einem Außenumlaufauslass (10) versehen ist, Ein oberer Teil der anderen Seite des Hilfsreaktionsgehäuses (2, 21) ist mit einem äußeren Zirkulationseingang (13) ausgestattet, der mit der Außenseite des äußersten Hilfsreaktionsgehäuses (2, 22) kommuniziert ist, der entsprechende äußere Zirkulationsausgaß (10) und der äußere Zirkulationseingang (13) des Hilfsreaktionsgehäuses durch einen Kanal kommuniziert werden, und der Kanal ist mit einer Umwälzpumpe versehen, und eine zweite Temperaturregelvorrichtung (8) ist im Hilfsreaktionsgehäuse (2, 21, 22) angeordnet.

2. Der kontinuierliche Reaktor gemäß Anspruch 1, **dadurch gekennzeichnet, dass** zwei oder mehrere Reaktionsgehäuse (21, 22) vorgesehen sind und von innen nach außen ummantelt angeordnet sind und zwischen zwei benachbarten Hilfsreaktionsgehäusen (21, 22) ein reservierter Reaktionsholz vorgesehen ist.

3. Der kontinuierliche Reaktor gemäß Anspruch 1, **dadurch gekennzeichnet, dass** das obere Ende jedes Hauptreaktionsgehäuses (1) und des Hilfsreaktionsgehäuses (2, 21, 22) ein offener Teil ist, ein Abdeckkörper (15) am offenen Teil vorgesehen ist und der Materialeinlass (3) auf dem Abdeckkörper (15) angeordnet ist.

4. Der kontinuierliche Reaktor gemäß Anspruch 1, **dadurch gekennzeichnet, dass** die erste Temperaturregelvorrichtung (8) und die zweite Temperaturregelvorrichtung (8) beide Öltemperaturregler sind.

5. Der kontinuierliche Reaktor, wie in einem der Ansprüche 1-4 behauptet, **dadurch gekennzeichnet, dass** eine Stützstruktur (9) zwischen der Außenseite des Hauptreaktionsgehäuses (1) und der Innenseite des Hilfsreaktionsgehäuses (2, 21, 22) oder zwischen den Hilfsreaktionsgehäusen (21, 22) verbunden ist.

6. Der kontinuierliche Reaktor, wie in einem der Ansprüche 1-4 beansprucht, **dadurch gekennzeichnet, dass** a6.Filtersieb (5) im Hauptreaktionsgehäuse (1) unterhalb der Überlauföffnung (7) und im oberen Teil der Reaktionshöhle vorgesehen ist.

7. Der kontinuierliche Reaktor, wie in einem der Ansprüche 1-4 angegeben, der in diesem letzten Port (4) gekennzeichnet ist, ist am oberen Ende des Hauptreaktionsgehäuses (1) und/oder des auxiliaren Reaktionsgehäuses (2, 21, 22) vorgesehen.

8. Der kontinuierliche Reaktor gemäß einem der Ansprüche 1-4, **dadurch gekennzeichnet, dass** das obere Ende jedes Hauptreaktionsgehäuses (1) und jedes zugehörigen Hilfsreaktionsgehäuses (2, 21, 22) mit einem Schacht (6) und/oder Inspektionsloch versehen ist.

## Revendications

1. Un réacteur continu, comprenant un boîtier de réaction principal (1) et au moins un boîtier de réaction auxiliaire (2, 21, 22), dans lequel le boîtier de réaction principal (1) est muni en interne d'un dispositif d'agitation (14) et d'un premier dispositif de régulation de température (8) et est muni d'une entrée de matériau (3) à son extrémité supérieure; Le boîtier de réaction auxiliaire (2,21, 22) est gainé à l'extérieur du boîtier de réaction principal (1) et une cavité de réaction est réservée entre celui-ci; Un trou de débordement (7) en communication avec la cavité de réaction est formé sur une paroi latérale supérieure du boîtier de réaction principal (1); L'extrémité inférieure de chaque boîtier de réaction principal (1) et du boîtier de réaction auxiliaire (2, 21,22) est pourvue d'un orifice de drainage (11) qui est en communication avec l'extérieur du boîtier de réaction auxiliaire (2, 21,22); Et l'extrémité inférieure du boîtier de réaction auxiliaire (2, 21, 22) est pourvue d'un port de charge (12); **Caractérisé en ce qu'**une partie inférieure d'un côté du boîtier de réaction auxiliaire (2, 21) est pourvue d'une sortie de circulation externe (10) en communication avec l'extérieur du boîtier de réaction auxiliaire externe (2, 22), une partie supérieure de l'autre côté du boîtier de réaction auxiliaire (2, 21) est pourvue d'une entrée de circulation externe (13) en communication avec l'extérieur du boîtier de réaction auxiliaire externe (2, 22), La sortie de circulation externe correspondante (10) et l'entrée de circulation externe (13) du boîtier de réaction auxiliaire sont communiquées par un conduit, et le conduit est muni d'une pompe de circulation; Et un deuxième dispositif de régulation de température (8) est disposé dans le boîtier de réaction auxiliaire (2, 21, 22).

2. Le réacteur continu selon la revendication 1, **caractérisé en ce que** deux ou plusieurs boîtiers de réaction auxiliaires (21, 22) sont prévus et sont disposés de manière gainée de l'intérieur vers l'extérieur, et une cavité de réaction réservée est prévue entre deux boîtiers de réaction auxiliaires adjacents (21, 22).

3. Le réacteur continu selon la revendication 1, **caractérisé en ce que** l'extrémité supérieure de chacun du boîtier de réaction principal (1) et du boîtier de réaction auxiliaire (2, 21, 22) est une partie ouverte, un corps de couverture (15) est prévu à la partie ouverte, et l'entrée de matériau (3) est disposée sur le corps de couverture (15).

4. Réacteur continu selon la revendication 1, **caractérisé en ce que** le premier dispositif de régulation de température (8) et le second dispositif de régulation de température (8) sont tous deux des régulateurs de température de bobines.

5. Réacteur continu selon l'une quelconque des revendications 1-4, **caractérisé en ce qu'**une structure de support (9) est reliée entre l'extérieur du boîtier de réaction principal (1) et l'intérieur du boîtier de réaction auxiliaire (2, 21, 22) ou entre les boîtiers de réaction auxiliaire (21, 22).

6. Réacteur en continu selon l'une quelconque des revendications 1-4, caractérisé en ce a6. Le filtre (5) est fourni dans le boîtier de réaction principal (1) sous l'orifice de débordement (7) et dans la partie supérieure de la cavité de réaction.

7. Le réacteur continu selon l'une quelconque des revendications 1-4, **caractérisé en ce que** l'orifice (4) est prévu à l'extrémité supérieure du boîtier de réaction principal (1) et/ou du boîtier de réaction auxiliaire (2, 21, 22).

8. Réacteur continu selon l'une quelconque des revendications 1-4, **caractérisé en ce que** l'extrémité supérieure de chaque boîtier de réaction principal (1) et de chaque boîtier de réaction auxiliaire correspondant (2, 21, 22) est pourvue d'un trou d'égout (6) et/ou d'un trou d'inspection.
